# DEMANDE DE BREVET EUROPEEN

(11) **EP 4 458 504 A1**
(43) Date de publication de la demande: **06.11.2024**
(21) Numéro de dépôt: 24171240.5
(22) Date de dépôt: 19.04.2024
(51) Int. Cl.: B23K 20/12, B23K 101/00

(54) **PROCÉDÉ DE SOUDAGE PAR FRICTION ORBITALE D'UNE AUBE À UN MOIGNON SUR UN DISQUE ROTORIQUE DE TURBOMACHINE**

(30) Priorité: 21.04.2023 BE 202305300
(71) Demandeur: Safran Aero Boosters, 4041 Herstal (BE)
(72) Inventeur: LENAIN, Astrid, 4041 Herstal (BE); MOUGEL, Charly, 4041 Herstal (BE)
(74) Mandataire: Lecomte & Partners

(57) **Abrégé**

L'invention propose un procédé de soudage par friction orbitale d'une aube à un moignon sur un disque rotorique de turbomachine, comprenant les phases successives suivantes : friction (22, 24) de l'aube contre le moignon avec application d'une force normale de friction (F1, F2) ; forgeage (26) de l'aube contre le moignon avec application d'une force normale de forgeage (F3) ; où la force normale de forgeage est supérieure à la force normale de friction et essentiellement constante durant toute la phase de forgeage.

## Description

### Domaine technique

L'invention a trait à un procédé de soudage par friction d'aubes à un rotor de turbomachine, et plus particulièrement à un procédé de soudage par friction orbitale d'aubes à un disque rotorique de turbomachine, de manière à former un disque aubagé pour turbomachine.

### Art antérieur

Le changement climatique est une préoccupation majeure pour de nombreux organes législatifs et de régulation à travers le monde. En effet, diverses restrictions sur les émissions de carbone ont été, sont ou seront adoptées par divers états. En particulier, une norme ambitieuse s'applique à la fois aux nouveaux types d'avions mais aussi à ceux en circulation nécessitant de devoir mettre en oeuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des avions. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des avions.

Par voie de conséquence, la Déposante travaille en permanence à la réduction de son incidence climatique négative par l'emploi de méthodes et l'exploitation de procédés de développement et de fabrication vertueux et minimisant les émissions de gaz à effet de serre au minimum possible pour réduire de l'empreinte environnementale de son activité.

Ces travaux de recherche et de développement soutenus portent à la fois sur les nouvelles générations de moteurs d'avions, l'allègement des appareils, notamment par les matériaux employés et les équipements embarqués allégés, le développement de l'emploi des technologies électriques pour assurer la propulsion, et, indispensables compléments aux progrès technologiques, les biocarburants aéronautiques.

A cet effet, l'invention est le résultat des recherches technologiques visant à améliorer de manière très significative les performances des avions et, en ce sens, contribue à la réduction de l'impact environnemental des avions.

Dans ce contexte, l'invention vise un procédé de soudage par friction orbitale pour la réalisation d'un disque aubagé (communément désigné par : « blisk ») ou un tambour aubagé (communément désigné par « blum ») de compresseur de turbomachine.

Le soudage par friction orbitale est un procédé de soudage dans lequel les pièces à assembler sont mises en contact sous effort et soudées par une mise en mouvement circulaire généralement définit par un excentrique, et accompagné d'une vitesse tangentielle uniforme, de manière à générer un frottement et un échauffement homogène au niveau d'une jonction de soudure entre les deux pièces.

Il est par ailleurs connu d'avoir recours au soudage par friction linéaire, il s'agit d'un procédé de soudage dans lequel la chaleur nécessaire est créée par un mouvement de va-et-vient des interfaces à souder. Cependant, le soudage par friction orbital présente plusieurs avantages par rapport à la friction linéaire, par exemple, le mouvement relatif entre les deux interfaces est continu grâce au mouvement de friction circulaire, ce qui apporte une meilleure homogénéité thermique. Contrairement au mouvement linéaire pour lequel la vitesse relative des deux pièces devient nulle à chaque demi-période d'oscillation. De plus, le temps de cycle d'un soudage orbital est considérablement inférieur à celui du soudage par friction linéaire (respectivement environ 2 minutes comparé à environ 5 minutes).

Le document de brevet publié EP 2 535 516 A1 divulgue un procédé de soudage par friction orbitale d'aubes à un rotor de turbomachine, dans lequel, une fois une consommation matière désirée est atteinte, le mouvement orbital est stoppé à une position de référence, et un effort de forgeage est exercé sur l'aube contre le rotor afin de finaliser la soudure.

Toutefois, le procédé de soudage de type orbital divulgué par le document présente une marge d'amélioration. En effet, celui-ci peut nécessiter une meilleure maîtrise des paramètres de soudure de manière à éviter des défauts structurels et d'améliorer la santé matière au niveau de la jonction soudée, ainsi que d'améliorer la précision du positionnement de l'aube par rapport au disque rotorique.

### Résumé de l'invention

### Problème technique

L'invention a pour objectif de résoudre au moins un des problèmes posés par l'art antérieur. Plus précisément, l'invention a pour objectif de proposer une solution simple permettant d'obtenir une soudure entre l'aube et le moignon du disque rotorique, qui soit saine et exempte de défauts structurels.

### Solution technique

L'invention a pour objet un procédé de soudage par friction orbitale d'une aube à un moignon sur un disque rotorique de turbomachine, comprenant les phases successives suivantes :
- friction de l'aube contre le moignon avec application d'une force normale de friction ;
- forgeage de l'aube contre le moignon avec application d'une force normale de forgeage ;
remarquable en ce que la force normale de forgeage est supérieure à la force normale de friction et essentiellement constante durant toute la phase de forgeage.

Avantageusement, le procédé comprend l'application de la force normale de forgeage au moyen d'un actionneur recevant une consigne d'application d'effort constante. Préférentiellement, l'actionneur appartenant à une machine réalisant le soudage orbital.

Selon un mode avantageux de l'invention, la phase de friction comprend une phase de contact avec une première force normale de friction, suivie d'une phase de consommation de matière avec une deuxième force normale de friction supérieure à la première force normale de friction.

Selon un mode avantageux de l'invention, la première force normale de friction est constante avec une tolérance de ±10% durant toute la phase de contact, et/ou la deuxième force normale de friction est constante avec une tolérance de ±10% durant toute la phase de consommation de matière.

Selon un mode avantageux de l'invention, la consommation de matière démarre avant la phase de consommation de matière.

Selon un mode avantageux de l'invention, la phase de consommation de matière démarre dès l'atteinte d'une première consommation de matière égale à au moins 0,1 mm.

Selon un mode avantageux de l'invention, la phase de forgeage présente une durée supérieure à une durée de la phase de friction.

Selon un mode avantageux de l'invention, la phase de contact dure deux fois plus que la phase de consommation de matière.

Selon un mode avantageux de l'invention, la deuxième force normale de friction correspond à au moins 1,5 fois la première force normale de friction.

Selon un mode avantageux de l'invention, la force normale de forgeage est plus élevée d'au moins 50% par rapport à la deuxième force normale de friction.

Selon un mode avantageux de l'invention, la phase de consommation de matière comprend une vitesse de consommation de matière qui reste constante durant toute une durée d'application de la deuxième force normale de friction.

Selon un mode avantageux de l'invention, la vitesse de consommation de matière étant comprise entre 2 mm/s et 20 mm/s.

Selon un mode avantageux de l'invention, la phase de consommation de matière dure au plus 2 secondes.

Selon un mode avantageux de l'invention, la phase de friction comprend une application d'une oscillation par mouvement orbital à l'aube, ladite oscillation étant excentrique par rapport au moignon.

Selon un mode avantageux de l'invention, la force normale de forgeage est constante avec une tolérance de ±10% durant toute la phase de forgeage.

L'invention a également pour objet un procédé de fabrication d'un disque aubagé pour turbomachine comprenant une pluralité d'aubes, chacune desdites aubes étant soudée à un moignon sur un disque rotorique, remarquable en ce que le soudage des aubes aux moignons étant un soudage à friction orbitale réalisé suivant le procédé de soudage selon l'invention.

Les mesures de l'invention sont avantageuses en ce que le procédé de soudage assure une meilleure maîtrise des paramètres du soudage de manière à optimiser la consommation de matière d'assurer des contraintes réparties de manière plus homogène au droit de la jonction. Cela réduit les risques de présence de défauts métallurgiques dans la jonction soudée pouvant amener à la fissuration ou à la déformation de ladite jonction.

De plus, le procédé de soudage de l'invention permet de maîtriser l'épaisseur maximale de la jonction soudée postérieurement à la fin du soudage orbital, permettant ainsi d'obtenir une hauteur radiale plus précise du plan de soudure entre l'aube et le moignon.

Il est entendu que chaque détail d'un mode de réalisation ci-dessous peut être combiné à chaque autre détail des autres modes de réalisation.

### Brève description des dessins

La figure 1 représente de manière schématique une vue en perspective, lors d'un soudage par friction orbitale d'une aube à un moignon sur un disque rotorique de turbomachine, ledit soudage étant réalisé selon le procédé de soudage de l'invention ;
La figure 2 illustre schématiquement un graphique représentant l'évolution d'une consommation de matière et de différentes forces lors du soudage par friction orbitale de l'aube au moignon, selon le procédé de l'invention.

### Description détaillée des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine, les longueurs étant mesurées axialement. Les largeurs sont mesurées selon la circonférence. La direction radiale est perpendiculaire à l'axe de rotation. L'amont et l'aval sont en référence au sens d'écoulement principal du flux dans la turbomachine.

Les dimensions des figures ne sont pas à l'échelle et en particulier les épaisseurs ou les dimensions radiales sont exagérées pour faciliter la lecture des figures.

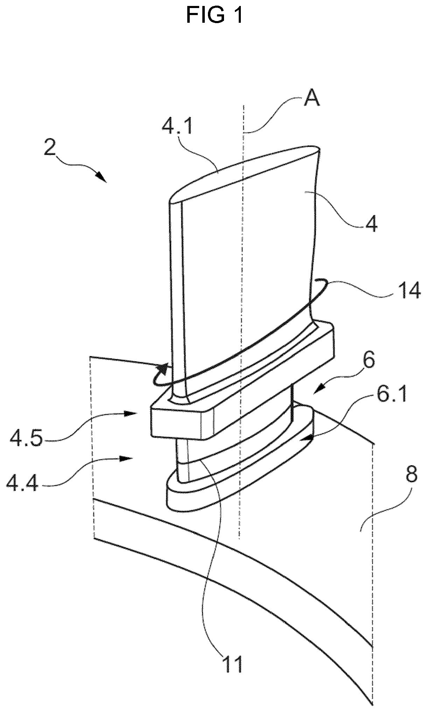

La figure 1 représente de manière schématique une vue en perspective, lors d'un soudage par friction orbitale d'une aube 4 à un moignon 6 sur un disque rotorique 2 de turbomachine, ledit soudage étant réalisé selon le procédé de soudage de l'invention.

Le disque rotorique 2 comprend une rangée annulaire de moignons 6 s'étendant radialement extérieurement depuis une surface externe 8 dudit disque rotorique 2.

La présente invention propose un procédé de soudage des aubes 4 aux moignons 6 de manière à permettre la fabrication d'un disque aubagé pour turbomachine. Préférentiellement, le disque aubagé est une roue mobile destinée à être disposée en amont d'un bec de séparation de flux d'air dans une turbomachine. A cet effet, la surface externe 8 correspond à une surface de guidage d'air d'une veine de fluide le long de la turbomachine. Alternativement, le disque aubagé peut correspondre à un rotor de type tambour appartenant à un compresseur haute-pression ou basse-pression.

De préférence, le disque aubagé est un disque dit : « bi-matériaux » comprenant deux alliages de titane différents. Par exemple, les aubes 4 peuvent être fabriquées à partir d'un alliage Ta6v, et le disque rotorique 2 à partir d'un des alliages suivants : Ti17, Ti575, Ti10.2.3.

De manière avantageuse, le mélange des deux alliages de titane différents (Ta6v et Ti17) présente une usinabilité plus aisée, et permet d'atteindre un gain en masse par rapport à une solution basée, par exemple, uniquement sur un alliage en Ti17, cela est notamment dû à une densité du Ta6v qui est légèrement plus faible que celle du Ti17.

En effet, l'alliage Ti17 a été préférentiellement choisi pour la partie disque pour ces bonnes caractéristiques en fatigue HCF (acronyme anglais de : « High Cycle Fatigue ») et LFC (« Low Cycle Fatigue »). Un disque en Ti17 affichera également une plus grande marge en vitesse d'éclatement qu'un disque en Ta6v. Pour les aubes, l'alliage Ta6v a été choisi car permet de procurer aux aubes une élongation à rupture plus élevée (meilleure tenue aux impacts), et un meilleur comportement en propagation de fissures qui se traduit par une meilleure durabilité aux impacts basse énergie.

L'aube 4 est soudée au moignon 6 au moyen d'une section de jonction 11 correspondant à une interface de contact lors du soudage orbital. A cet égard, l'aube 4 est déplacée de manière circulaire autour d'un axe A par un mouvement d'oscillation orbital 14, dont l'amplitude et la fréquence d'oscillation sont pilotées par la machine réalisant le soudage orbital. L'axe A s'étend radialement depuis un centre de la section de jonction 11 du moignon 6. Préférentiellement, l'aube 4 et le moignon 6 comprennent chacun la même section de jonction 11.

De préférence, le mouvement d'oscillation orbital 14 est uniforme et présente une excentricité correspondant à un écart tangentiel (coplanaire à la section 11) entre un centre de la section de jonction 11 de l'aube 4 et l'axe A.

Préalablement au soudage par friction orbitale au moyen du mouvement d'oscillation orbital 14, un volume de matière sacrificiel (s'étendant essentiellement radialement) est prévu sur chacun des aubes 4 et des moignons 6 à assembler. Ce volume sacrificiel est amené à être extrudé en dehors de l'interface de contact entre les deux sections de jonction 11, formant ainsi une bavure, communément désignée par : « flash », qui sera ensuite éliminée, de préférence, par usinage, afin d'arriver à la section finale (correspondant au profil aérodynamique 4.1 de l'aube 4) pour former le disque aubagé.

L'aube 4 peut comprendre une extrémité inférieure 4.4 pourvue d'un renfort 4.5 qui sera usiné postérieurement à l'opération de soudage conjointement avec un volume 6.1 de renfort du moignon 6 sur le disque 2.

Préférentiellement, la section de jonction 11 de chacun des aube 4 et moignon 6, comprend une surface totale supérieure ou égale à 200 mm² et inférieure ou égale à 7000 mm², et plus préférentiellement comprise entre 2000 mm² et 3000 mm².

La section 11 à souder est alors considérée comme étant une « grande » section. Dans cette configuration, l'outillage réalisant la soudure orbitale est davantage sollicité mécaniquement. De plus, l'aube 4 et le moignon 6 étant fabriqués suivant deux alliages de titane différents, il a été observé que cela peut être source de complications pour la jonction soudée, qui risque de comporter des défauts structurels et dimensionnels pouvant affecter la tenue mécanique globale du disque aubagé.

A cet égard, le procédé de soudage selon l'invention propose d'améliorer la qualité structurelle et dimensionnelle de la soudure entre l'aube 4 et le moignon 6 du disque rotorique 2.

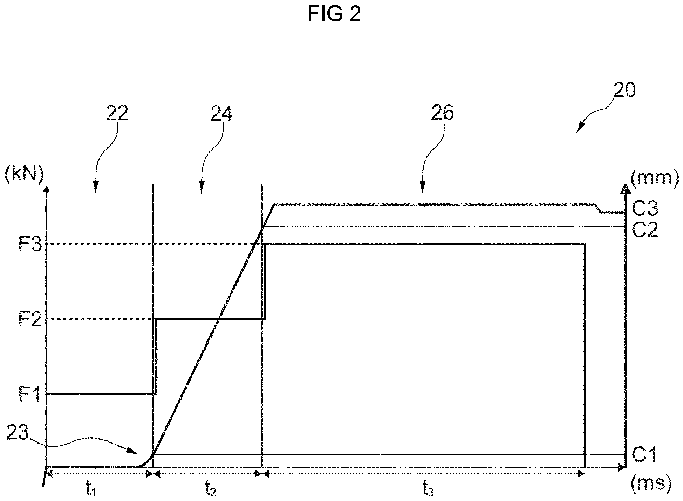

La figure 2 illustre schématiquement un graphique 20 représentant l'évolution d'une consommation de matière et de différentes forces lors du soudage par friction orbitale de l'aube au moignon.

Le graphique 20 comporte un axe des abscisses représentant le temps de soudage (en ms) et deux axes des ordonnées correspondant, respectivement, à un axe gauche représentant les différentes forces F1, F2 et F3 normales appliquées, i.e. dont la direction est radiale et perpendiculaire à la section de jonction et pouvant être exprimées en kN, et à un axe droit représentant la consommation de matière (en mm) entre l'aube et le moignon.

On peut distinguer sur le graphique 20, deux phases de soudage correspondant successivement à une phase de friction 22, 24 de l'aube contre le moignon, et à une phase de forgeage 26 de l'aube contre le moignon.

La phase de friction 22, 24 comprend l'application de l'oscillation par mouvement orbital 14 de l'aube (visible à la figure 1). Ladite phase de friction 22, 24 comprend préférentiellement deux phases qui se suivent, à savoir : une première phase de contact 22 avec l'application d'une première force normale de friction F1, suivie d'une deuxième phase de consommation de matière 24 qui comprend l'application d'une deuxième force normale de friction F2.

De manière avantageuse, la phase de contact 22 permet d'assurer une mise en chauffe homogène des deux sections de jonction de chacune de l'aube et du moignon, ce qui permet d'optimiser les conditions de malaxage de la matière lors de la phase de consommation 24.

La consommation de matière démarre, de préférence, avant l'application de la force F2, et donc avant la phase de consommation 24, cela est visible à la partie 23 du graphique 20. Ainsi, une première consommation C1 a lieu juste après la phase de contact 22.

De préférence, la première force de friction F1 est appliquée de façon constante ou avec une tolérance de variation de ±10%, et cela jusqu'à atteindre une valeur prédéfinie de la première consommation C1, de préférence égale à au moins 0,1 mm. Ainsi, la durée t₁ de la phase de contact 22 correspond au temps nécessaire pour atteindre la première consommation C1. Similairement à ladite première force F1, la deuxième force de friction F2 est également appliquée de façon constante ou avec une tolérance de variation ±10% sur toute une durée t₂ de la phase de consommation de matière 24 jusqu'à atteindre une deuxième consommation C2 qui comprend une valeur prédéfinie correspondant à une consigne à atteindre. Les autres paramètres (l'excentrique, la fréquence, etc.) reste inchangés lors de l'application de la force de friction F2. Cela permet d'assurer un régime stabilisé et une vitesse de consommation de matière *VCA* qui demeure linéaire pendant toute la durée t₂ de la phase de consommation 24.

En effet, la phase de consommation 24 comprend une vitesse de consommation de matière *VCA* qui reste sensiblement stable et constante durant toute une durée d'application de la deuxième force normale de friction F2.

La durée t₁ de la phase de contact 22 est supérieure à la durée t₂ de la phase de consommation 24. Préférentiellement, durée t₁ est environ égale au double de la durée t₂ (le terme « environ » signifie ici ±20% de la durée t₂). La phase de consommation 24 peut durer entre 500 ms et 5 secondes. La vitesse *VCA* peut être comprise entre 1 mm/s et 30 mm/s, et est préférentiellement entre 2 mm/s et 20 mm/s.

Préférentiellement, la deuxième force de friction F2 est supérieure d'au moins 50% par rapport à la première force de friction F1, et d'au plus 400% par rapport à ladite force F1. Plus préférentiellement, la deuxième force F2 correspond à environ trois fois la première force F1. De préférence, la première force F1 est comprise entre 10 et 50 kN, et la deuxième force de friction F2 est comprise entre 30 et 150 kN.

Bien que passage de la première force F1 vers la deuxième force F2 est illustré comme étant incrémental, celui-ci peut durer quelques ms de façon à lisser davantage l'augmentation de la force F1 pour atteindre la deuxième force F2. Cela permet de garantir un meilleur contact entre l'aube et le moignon, ainsi qu'une meilleure transmission de la chaleur, pour assurer un malaxage homogène lors de la phase de consommation 24 qui aide à améliorer la qualité de la soudure.

On peut voir sur le graphique 20 que la phase de consommation de matière 24 est suivie de la phase de forgeage 26 de l'aube contre le moignon. Cette dernière comprend l'application de la force normale de forgeage F3 qui est supérieure à la deuxième force de friction F2, et préférentiellement supérieure d'au moins 50% par rapport à la deuxième force de friction F2, et d'au plus 400% par rapport à ladite force F2. Plus préférentiellement, la force de forgeage F3 correspond à environ trois fois la deuxième force de friction F2, et encore plus préférentiellement à environ 3,3 fois la deuxième force de friction F2. De préférence, la force normale de forgeage F3 est comprise entre 90 et 450 kN.

La force de forgeage F3 correspond préférentiellement à une augmentation progressive (pouvant durer quelques ms) de la deuxième force de friction F2, cette augmentation est similaire au passage de la première force F1 vers ladite force F2. Dans cette configuration, la fréquence d'oscillation du mouvement orbital est arrêtée simultanément au moment de l'application de la force de forgeage F3. Préférentiellement, ladite force F3 est stabilisée de manière essentiellement constante (le terme « essentiellement » désigne une variation d'au plus ±10% de la force F3, et préférentiellement d'au plus ±5%), pendant toute une durée t₃ de la phase de forgeage 26.

Avantageusement, la transition vers la phase de forgeage 26 est fluide et permet de freiner progressivement le mouvement d'oscillation orbital, ce qui permet donc de réduire la vitesse de consommation de matière *VCA* afin de stabiliser la consommation matière (pendant quelques ms) avant son arrêt complet pendant le reste (au moins 90%) de la durée de forgeage t₃.

La durée de forgeage t₃ est supérieure à la durée t₁ + t₂ de la phase friction 22, 24. Préférentiellement, la durée de forgeage t₃ correspond à environ 3 fois la durée t₂ de la phase de consommation de matière 24. Cela permet de garantir un temps de refroidissement de la jonction sous contrainte (en application de la force F3) qui soit suffisamment élevé pour comprimer et refroidir efficacement les deux alliages de titane différents, et ainsi maîtriser l'épaisseur maximale de la jonction soudée postérieurement à la fin du soudage orbital, ce qui permet d'assurer une hauteur radiale plus précise du plan de soudure entre l'aube et le moignon.

En effet, la durée élevée du temps de forgeage t₃ ainsi que l'application constante de la force de forgeage F3 permet d'assurer des contraintes réparties de manière plus homogène au droit de la jonction, ce qui réduit les risques de fissuration ou de déformation, améliorant ainsi la santé matière et la qualité structurelle et dimensionnelle de la jonction soudée.

La force de forgeage F3 est appliquée de manière constante jusqu'à atteindre une consommation finale C3 qui signe la fin de la soudure parallèlement à l'arrêt de l'application de la force F3, suite à laquelle le titane au droit de la jonction se rétabli complètement du malaxage et du forgeage subis lors du soudage.

## Revendications

1. Procédé de soudage par friction orbitale d'une aube à un moignon sur un disque rotorique de turbomachine, comprenant les phases successives suivantes :
- friction (22, 24) de l'aube (4) contre le moignon (6) avec application d'une force normale de friction (F1, F2) ;
- forgeage (26) de l'aube (4) contre le moignon (6) avec application d'une force normale de forgeage (F3) ;
**caractérisé en ce que**
la force normale de forgeage (F3) est supérieure à la force normale de friction (F1, F2) et essentiellement constante durant toute la phase de forgeage (26).

2. Procédé de soudage selon la revendication 1, dans lequel la phase de friction (22, 24) comprend une phase de contact (22) avec une première force normale de friction (F1), suivie d'une phase de consommation de matière (24) avec une deuxième force normale de friction (F2) supérieure à la première force normale de friction (F1).

3. Procédé de soudage selon la revendication 2, dans lequel la première force normale de friction (F1) est constante avec une tolérance de ±10% durant toute la phase de contact (22), et/ou la deuxième force normale de friction (F2) est constante avec une tolérance de ±10% durant toute la phase de consommation de matière (24).

4. Procédé de soudage selon l'une des revendications 2 et 3, dans lequel la consommation de matière démarre avant la phase de consommation de matière (24).

5. Procédé de soudage selon l'une des revendications 2 à 4, dans lequel la phase de consommation de matière (24) démarre dès l'atteinte d'une première consommation de matière (C1) égale à au moins 0,1 mm.

6. Procédé de soudage selon l'une des revendications 1 à 5, dans lequel la phase de forgeage (26) présente une durée (t₃) supérieure à une durée de la phase de friction (t₁, t₂).

7. Procédé de soudage selon l'une des revendications 2 à 6, dans lequel la phase de contact (22) dure deux fois plus que la phase de consommation de matière (24).

8. Procédé de soudage selon l'une des revendications 2 à 7, dans lequel la deuxième force normale de friction (F2) correspond à au moins 1,5 fois la première force normale de friction (F1).

9. Procédé de soudage selon l'une des revendications 2 à 8, dans lequel la force normale de forgeage (F3) est plus élevée d'au moins 50% par rapport à la deuxième force normale de friction (F2).

10. Procédé de soudage selon l'une des revendications 2 à 9, dans lequel la phase de consommation de matière (24) comprend une vitesse de consommation de matière qui reste constante durant toute une durée (t₂) d'application de la deuxième force normale de friction (F2).

11. Procédé de soudage selon la revendication 10, dans lequel la vitesse de consommation de matière étant comprise entre 2 mm/s et 20 mm/s.

12. Procédé de soudage selon l'une des revendications 2 à 11, dans lequel la phase de consommation de matière (24) dure au plus 2 secondes.

13. Procédé de soudage selon l'une des revendications 1 à 12, dans lequel la phase de friction (22, 24) comprend une application d'une oscillation par mouvement orbital (14) à l'aube (4), ladite oscillation (14) étant excentrique par rapport au moignon (6).

14. Procédé de soudage selon l'une des revendications 1 à 13, dans lequel la force normale de forgeage (F3) est constante avec une tolérance de ±10% durant toute la phase de forgeage (26).

15. Procédé de fabrication d'un disque aubagé pour turbomachine comprenant une pluralité d'aubes (4), chacune desdites aubes (4) étant soudée à un moignon (6) sur un disque rotorique (2), **caractérisé en ce que** le soudage des aubes (4) aux moignons (6) étant un soudage à friction orbitale réalisé suivant le procédé de soudage selon l'une des revendications 1 à 14.
